Europäisches Patentamt

(19) European Patent Office

Office européen des brevets

(11) Publication number: **0 014 042**
A1

## (12) EUROPEAN PATENT APPLICATION

(21) Application number: 80300069.4

(22) Date of filing: 08.01.80

(51) Int. Cl.³: **E 21 B 17/07,** E 21 B 44/00, F 16 F 15/03

(30) Priority: 16.01.79 GB 7901611

(43) Date of publication of application: 06.08.80 Bulletin 80/16

(84) Designated Contracting States: AT BE CH DE FR GB IT LU NL SE

(71) Applicant: INTORALA LTD., 16 Justice Mill Lane, Aberdeen. AB1 2EP Scotland (GB)

(72) Inventor: Ferrier, John Eric, 9 Broadhaven Road Old Portlethen, Aberdeen Scotland (GB)

(74) Representative: Szczuka, Jan Tymoteusz et al, Cruikshank & Fairweather 19 Royal Exchange Square, Glasgow G1 3AE Scotland (GB)

(54) Borehole drilling apparatus.

(57) The present invention relates to a borehole drilling apparatus.

In known such drills there is a significant loss in drilling rate due to loss of drill bit contact time resulting from bouncing of the drill bit on the surface being cut with movement of the bit away from said surface.

According to the present invention a borehole drilling apparatus is provided with a drill spring comprising first and second relatively slidable members 1, 2 having a first chamber 6 for containing a electro-viscous fluid 3 and connected by a relief passage 12 to a relief chamber 13. Electric field generation means are disposed adjacent the relief passage 12 for producing an electric field in fluid passing therethrough in response to movement of the first member 1 with movement of the drill bit away from the surface being cut. This results in a substantial resistive force tending to prevent flow of the fluid 3 through the passage 12 which is however discontinued when movement of the first member 1 resulting from movement of the bit from the surface ceases thereby allowing the fluid and first member to return freely.

0014042

## BOREHOLE DRILLING APPARATUS.

The present invention relates to a borehole drilling apparatus for drilling through a surface with a drill bit, said apparatus having a drill string or rod.

When operating drilling apparatus either using a down-hole motor or a rotary bit the efficiency of drilling and hence the rate of drilling progress is a function of the pressure bearing on the bit. In order to incorporate some degree of control over the pressure on the bit in a floating rig a slip joint or compensator may be placed in the string below which a known weight of drilling components including e.g.collars may be allowed to bear on the drill bit.

There is evidence however that this is not particularly efficient as the motion of the drill and the jet action of the fluid from the drill nozzles tends to bounce the drill away from the surface of the material to be bored. When the drill bounces away from this surface there is no further cutting by the bit until gravity returns the drill bit into contact with the surface at the base of the borehole.

It is an object of the invention to provide a device which improves drilling efficiency by reacting against the tendency of the bit to move away from the surface to be cut and thereby increasing the contact time for the drill bit and hence the speed of drilling.

According to the present invention the apparatus includes a drill spring for resisting movement of the drill bit away from a surface being drilled, said drill spring comprising a first member and a second member relatively slidable in use of the drill in a longitudinal direction parallel to the direction of drilling between an extended position when the drill bit is in contact with the surface being drilled and a contracted position with the drill bit away from said surface; a first chamber for containing electro-viscous fluid, said chamber being disposed between said members so that the volume of said first chamber is reduced during contraction as said members are moved from said extended position towards said contracted position; a relief passage extending from said first chamber to a relief chamber for the passage and receipt, respectively, of fluid from said first chamber when the volume of the latter is reduced; electrical field generation means disposed adjacent said relief passage for producing an electrical field in electro-viscous fluid passing through said passage in use of the drill; contraction sensing means arranged for directly or indirectly sensing relative movement between said members from said extended position to said contracted position; and control means arranged for activating said electric field generation means in response to sensing of contraction by said contraction sensing means and de-activating said electric field generation means when said contraction ceases, whereby passage of the electro-viscous fluid through the relief passage during contraction is restrained whilst return of the fluid through the passage to the first chamber when contraction ceases is substantially unimpeded.

Electro-viscous fluids have the property that when subjected to an electric field their ability to withstand shear is greatly enhanced. This enhancement is not velocity gradient dependent as with the shear stress developed in Newtonian fluids; it is only a function of the applied field strength.

The contraction sensing means may sense the relative movement directly, e.g. by detecting relative displacement between normally aligned predetermined reference points or indirectly e.g. by means of an accelerometer provided in one or other of the first and second members for sensing acceleration thereof. Any such acceleration would normally be absent from the other of said members or at least different in the other so that it would normally correspond to a relative displacement between the members. Thus it will be understood that as used herein the expression 'contraction sensing means' is intended to be construed in a broad sense and is not intended to be restricted to means which detect directly relative displacement between aligned respective portions of the members.

Conveniently the first and second members are in the form of concentric tubular members having their adjacent surfaces formed and arranged so as to define therebetween an annular first chamber whose depth is reduced by the contraction and an annular relief passage connecting the first chamber to a relief chamber, with field generation means including opposed electrodes in the first and second members on either side of the relief passage.

Because the spring is substantially passive whilst the drill bit is in contact with the surface to be cut it does not act on the bit as an additional mass in the collar weighting string, and therefore does not suffer from the inherent disadvantage resulting from merely increasing the weight on the bit.

The drill spring of the invention may be disposed in the slip joint, drill pipe, collar or drill bit assembly, the optimum position being readily determinable by mass-spring analysis of the individual components of

0014042

the drill string.

The drill string comprising the drill pipe, collars, bit and the drill spring can be assumed to consist of a series of masses and springs. The position of the drill spring in this series relative to the other components may, for example, be between the drill pipe and collars, between the collars and the bit, or between some of the collars and the remainder of the collars. The natural frequencies of each of these arrangements can be readily determined by solving a standard eigen-value problem by methods known to persons skilled in the art.

Advantageously the drill spring is disposed immediately behond the bit. In the case of a conventional roller bit, the drill spring may be incorporated in place of a conventional bearing cushioning device immediately behind the three cones of the bit.

Normally the extent of relative movement between the members is small and a slip joint is also used in or above the drill string. There is, however, no particular limit to the possible stroke length of the drill spring and it would be feasible to lengthen the spring so that the slip joint could be dispensed with entirely. The device can also be used to improve drilling times in land rigs where a slip joint would not necessarily be used by increasing the bottom hole contact time.

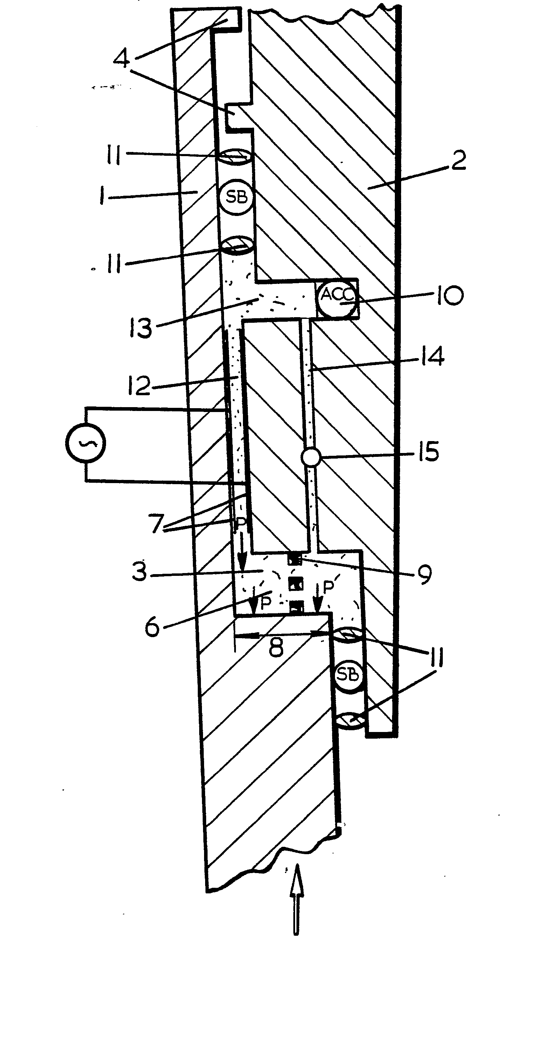

Further preferred details of the invention will appear from the following description, given by way of example, of one embodiment of a drill spring illustrated with reference to the accompanying drawing, which is a partial section of a drill spring.

The drawing shows a first member in the form of a lower cylindrical tube 1 disposed concentrically around a second member in the form of an upper cylindrical tube 2 which is slidable longitudinally relative thereto by means of bearings SB provided between the tubes 1,2. Where torque is to be transmitted between the tubes 1 and 2 a splined connection (not shown) is provided therebetween. This is not required if a down-hole motor is being used.

An annular space extending between the tubes 1,2 is filled with an electro-viscous fluid 3 and provides a first annular chamber 6 connected by an annular relief passage 12 to an annular relief chamber 13.

When raising or lowering the tool into the bore-hole the portion of the string below the tool is carried by an arrangement such as inter-engageable flanges 4 provide on the outer wall surface of the upper tube 2 and the inner wall surface of the lower tube 1. The bearings SB are sealed 11 from both sides against entry by the drilling fluid or electro-viscous fluid.

Should the drill tend to rise off the surface being cut it will exert an upward force on the lower tube 1, which as it moves will tend to compress the electro-viscous fluid in the chamber 6 forcing said fluid through the annular passage 12. Electric field generation means comprise opposed electrodes 7 disposed in the upper and lower tubes 2,1 on either side of the annular passage 12 and voltage supply means (not shown). When AC-voltage is applied between the electrodes there will be a back pressure generated at the lower end of the annular passage 12 at the lower end of the electrodes 7 which back pressure will also operate on a transverse wall surface 8 of the lower tube 1 which provides a lower end wall surface of the annular chamber 6 extending transversely of the direction of drilling. There will be a substantial mechanical advantage due to the relatively large ratio of the size of the transverse wall surface 8 to the transverse cross-sectional surface area of the annular relief passage 12.   This back pressure will tend to resist upward movement of the drill away from the surface to be cut.

The AC-voltage may be switched on by control means (not shown) responding to contraction sensing means (not shown) arranged for detecting upward motion of the lower tube 1 resulting in contraction of the upper tube 2 into the lower tube 1.   When the current is switched off by the control means upon discontinuation of the upward movement the fluid will tend to flow back into the annular chamber 6 below the electrodes 7.   The lower tube 1 will return under the action of gravity, aided by a return spring 9 and/or the expansion of a hydraulic or gas pressure accumulator 10.   Means may also be provided for the fluid to return via a by-pass passage 14 controlled by a hydraulic valve 15.

The drill spring of the invention may also be used as a damper to counter the transmission of deleterious vibrations from the drill pipe to the drill or in a downhole motor from the motor to the drill string.   In this case the frequency and voltage across the electrodes must be modulated, the control means being arranged to respond to movement sensors disposed either above or below the electrodes.   This damping should lead to enhanced drill stability which would be particularly valuable in directional drilling applications.

The drill spring may be used either as a discrete unit in the drill string, or incorporated integrally into a constituent of the drill string, for  example, the collar, bit, bumper sub, or compensator .

It will be appreciated that in the specific embodiment illustrated there will be a decrease in overlap between the electrodes 7 resulting in a reduced electro-viscous effect with increased relative displacement of the tubes 1,2.  Normally though the length of the electrodes will be made substantially greater than the expected displacement so that any reduced effect will be negligible for practical purposes.  Nevertheless if desired other electrode arrangements may be used and/or the voltage increased with increasing displacement so as to compensate for any such effects.

CLAIMS.

1.    A borehole drilling apparatus for boring through a surface with a drill bit, said apparatus having a drill string or rod, characterized in that the apparatus includes a drill spring for resisting movement of the drill bit away from a surface being drilled, said drill spring comprising a first member (1) and a second member (2) relatively slidable in use of the drill in a  longitudinal direction parallel to the direction of drilling between an extended position when the drill bit is in contact with the surface being drilled and a contracted position with the drill bit away from said surface;  a first chamber (6) for containing electro-viscous fluid (3), said chamber (6) being disposed between said members (1,2) so that the volume of said  first chamber (6) is reduced during contraction as said members (1,2) are moved from said extended position towards said contracted position; a relief passage (12) extending from said first chamber (6) to a relief chamber (13) for the passage and receipt, respectively, of fluid (3) from said first chamber (6) when the volume of the latter is reduced;  electrical field generation means (7) disposed adjacent said relief passage (12) for producing an electrical field in electro-viscous fluid (3) passing through said passage (12) in use of the drill;  contraction sensing means arranged for directly or indirectly sensing relative movement between said members (1,2) from said extended position;  and control means arranged for activating said electric field generation means (7) in response to sensing of contraction by said contraction sensing means and de-activating said electric field generation means (7) substantially in the absence of contraction, whereby passage of the electro-viscous fluid (3) through the relief passage (12) during contraction is restrained whilst return of the fluid through the passage (12)˙ to the first chamber when contraction ceases is substantially unimpeded.

2. Apparatus as claimed in Claim 1, characterized in that first and second members are in the form of concentric tubular members (1,2) having their adjacent surfaces formed and arranged so as to define therebetween an annular first chamber (6) whose depth is reduced by the contraction, and an annular relief passage (12 connecting the first chamber (6) to a relief chamber (13) with field generation means including opposed electrodes (7) in the first and second members (1,2) on either side of the relief passage (12).

3. Apparatus as claimed in Claim 1 or Claim 2, characterized in that the electric field generation means include means for generating an alternating current voltage.

4. Apparatus as claimed in any one of Claims 1 to 3, characterized in that a return spring is provided for facilitating return of the first and second members (1,2) to the extended position.

5. Apparatus as claimed in any one of Claims 1 to 4, characterized in that a fluid pressure accumulator (10) is provided in the pressure relief chamber (13) for facilitating return of the first and second members (1,2) to the extended position.

6. Apparatus as claimed in any one of Claims 1 to 5, characterized in that there is provided a by-pass return passage (14) extending between the relief chamber (13) and the first chamber (6), controlled by a valve (15) so as to prevent passage of fluid (3) during contraction whilst permitting return of electro-viscous fluid (3) to the first chamber (6) during return of the first and second members (1,2) to the extended position.

0014042

7.    Apparatus as claimed in any one of Claims 1 to 6, characterized in that there are provided co-operating flanges (4) on the first and second members (1,2) for limiting relative movement of said members (1,2) in the direction of the extended position so that in use of the apparatus when lowering or raising it in a borehole the lower one (1) of the first and second members (1,2) is carried by the upper one (2) of said first and second members (1,2).

8.    Apparatus as claimed in any one of Claims 1 to 7, characterized in that a splined connection is provided between the first and second members (1,2) for transmitting rotary motion therebetween.

9.    Apparatus according to any one of Claims 1 to 8, characterized in that the drill spring is incorporated immediately above the drill bit.

10.    Apparatus according to any one of Claims 1 to 8 which includes a rotary drill bit and rotatable cones, characterized in that the drill    spring is mounted behind at least one cone for cushioning thereof during drilling.

0014042

## DOCUMENTS CONSIDERED TO BE RELEVANT

| Category | Citation of document with indication, where appropriate, of relevant passages | Relevant to claim |
|---|---|---|
| X | <u>GB - A - 1 282 568</u> (GERRISH) <br> * Claims 1,14; page 2, lines 3-32; figure 5; page 2, lines 89-100; Page 3, lines 37-39; figure 9 * <br> -- | 1,2,4 |
| X | <u>FR - A - 1 117 141</u> (DAVIS) <br> * Summary, paragraphs 1,7; page 5, left-hand column, lines 19-22; page 5, left-hand column line 39 to right-hand column, line 1 * <br> -- | 1,2,4 |
| X | <u>US - A - 3 006 656</u> (SCHAUB) <br> * Column 3, line 74 to column 4, line 6; column 4, lines 27-28 * <br> -- | 1-4 |
| | <u>US - A - 3 606 297</u> (WEBB) <br> * Column 4, lines 47-61 * <br> -- | 1,7,8 |
| | <u>US - A - 4 133 516</u> (JURGENS) <br> * Column 4, lines 44-49; column 5, lines 56-68; column 6, lines 53-67 * <br> -- | 1,4, 6-9 |
| | <u>US - A - 3 382 936</u> (GALLE) <br> * Claim 1; column 8, lines 30-35 * <br> -- | 1,5,7, 8 |
| | <u>US - A - 3 998 280</u> (KISLING) <br> ./. | 1,5, 7,8 |

**CLASSIFICATION OF THE APPLICATION (Int. Cl. )**

E 21 B 17/07
E 21 B 44/00
F 16 F 15/03

**TECHNICAL FIELDS SEARCHED (Int.Cl. )**

E 21 B
F 16 F 15/03
B 60 G 17/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search The Hague | Date of completion of the search 25-04-1980 | Examiner SOGNO |
|---|---|---|

EPO Form 1503.1 06.78

| | DOCUMENTS CONSIDERED TO BE RELEVANT | | | CLASSIFICATION OF THE APPLICATION (Int. Cl. 3) |
|---|---|---|---|---|
| Category | Citation of document with indication, where appropriate, of relevant passages | | Relevant to claim | |
| | * Column 3, lines 46-68 * | | | |
| | -- | | | |
| | US - A - 3 203 184 (WHITTLE) | | 1 | |
| | * Claim 1 * | | | |
| | ---- | | | |
| | | | | **TECHNICAL FIELDS SEARCHED (Int. Cl. 3)** |